# EUROPEAN PATENT APPLICATION

(11) **EP 4 726 828 A1**
(43) Date of publication of application: **15.04.2026**
(21) Application number: 25206083.5
(22) Date of filing: 01.10.2025
(51) Int. Cl.: H01M 10/04, H01M 50/103, H01M 50/209

(54) **ELECTRIC BATTERY CELL INCORPORATING AN ANTI-SWELLING DEVICE**

(30) Priority: 14.10.2024 IT 202400022857
(71) Applicant: C.R.F. Società Consortile per Azioni, 10043 Orbassano (Torino) (IT)
(72) Inventor: GARGANO, Marcello, I-10043 Orbassano (Torino) (IT); FRATTINI, Domenico, I-10043 Orbassano (Torino) (IT); RICCO, Raffaele, I-10043 Orbassano (Torino) (IT); LORUSSO, Eligio, I-10043 Orbassano (Torino) (IT)
(74) Representative: Buzzi, Notaro & Antonielli d'Oulx S.p.A.

(57) **Abstract**

A prismatic-type electric battery cell (1) has a housing (2) having two opposite main walls (2A), an upper wall (2B), a lower wall (2C) and two end walls (2D). The cell incorporates an anti-swelling device, including at least one internal connecting member (4), acting as a tie rod, arranged inside the housing (2) and having two opposite sides connected to the two main walls (2A) of the housing (2), so as to tend to prevent an outward swelling of the main walls (2A). The internal connecting member (4) divides the space inside the housing (2) into two chambers in which two or more wound electrode sheet rolls (JR) are arranged, with the winding axis (5) directed vertically or horizontally. In this way, the swelling of the cell during the operation of a battery pack is significantly reduced, or eliminated altogether, without the use of limiting elements arranged outside the cell and with consequent savings in space, weight and production cost, and with a consequent increase in the energy density of the battery pack.

## Description

### Field of the invention

The present invention relates to electric battery cells for battery packs of electric or hybrid vehicles. The invention particularly concerns an electric battery cell of the so-called "prismatic" type, comprising a housing having two opposite main walls, an upper wall, a lower wall and two end walls, and one or more wound electrode sheet rolls ("jelly roll"), which are arranged within said housing.

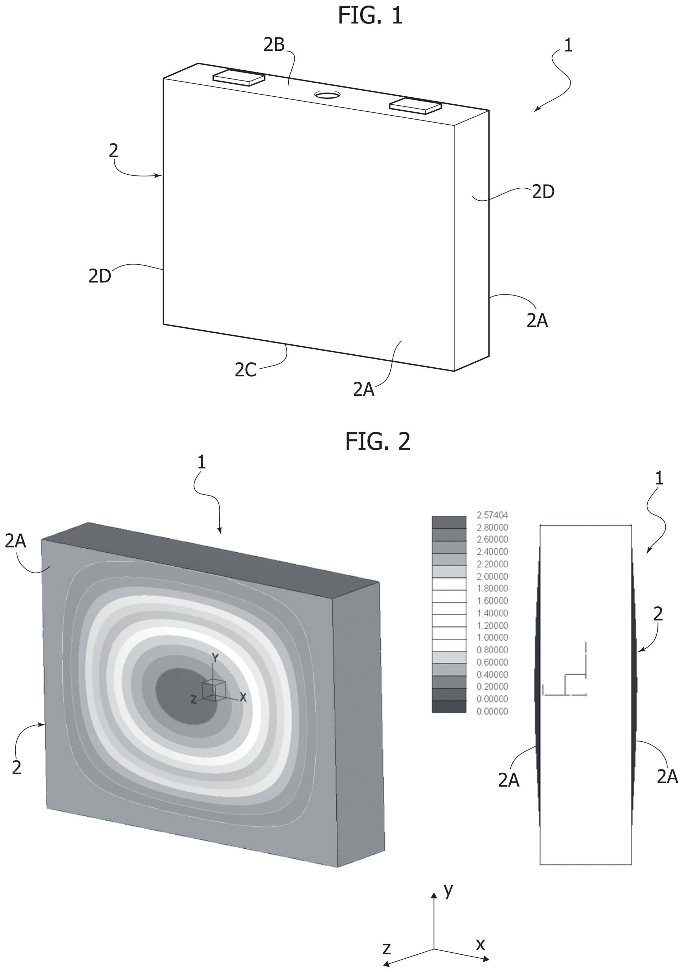

A cell of this type is schematically illustrated in figure 1 of the accompanying drawings. In said figure, reference numeral 1 indicates the battery cell as a whole, including a metallic housing 2 inside which, in a per se known manner, one or more wound electrode sheet rolls are arranged.

With further reference to figure 1, the metallic housing 2 includes two opposite main walls 2A, an upper wall 2B, a lower wall 2C, and two end walls 2D.

In battery cells of the type indicated above, the jelly rolls contained inside the cells are subject to expansion and contraction during the discharge and charge cycles of each cell, which leads to an outward swelling ("swelling") of the opposite main walls 2A of each cell. Said phenomenon involves hysteresis, whereby each cell tends to swell more and more.

Figure 2 of the accompanying drawings shows a perspective view and a side view of a conventional cell 1, in which the swelling to which each main wall 2A is subject is visible. The maximum swelling is at the center of the main wall 2A (the dimensions in figure 2 are in millimeters and refer to a measurement taken on a cell of the type described above).

Figure 3 of the accompanying drawings schematically shows in section both the housing 2 of the cell and the outer perimeter of a single jelly roll JR arranged inside the housing 2.

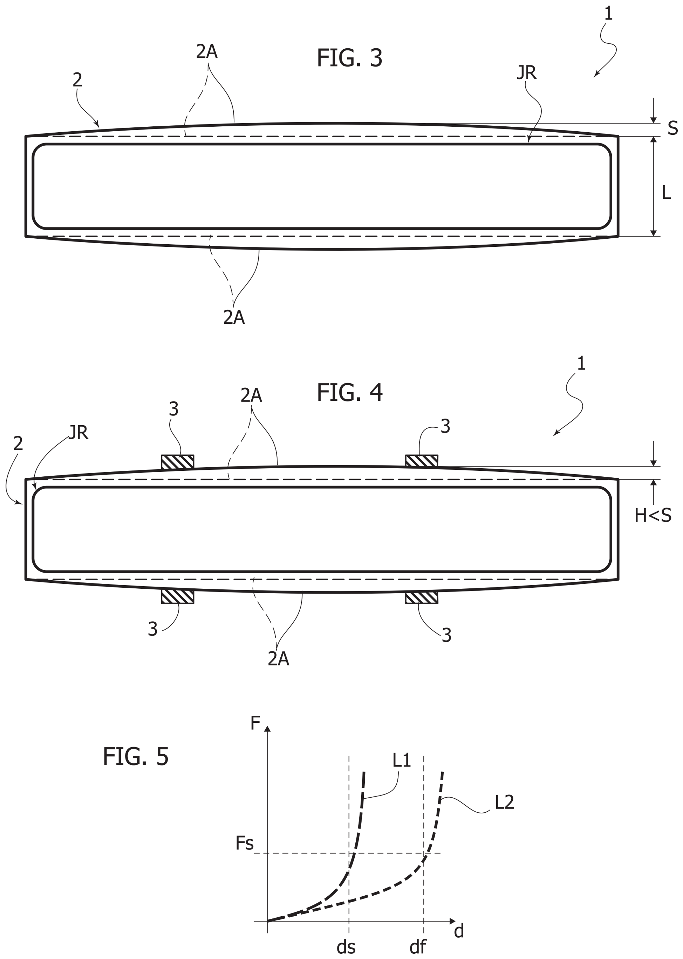

In the case of a conventional battery cell as illustrated in figure 3, the maximum swelling S at the center of each main wall 2A can be about 5-10% of the dimension L of the cell in the direction orthogonal to the main walls 2A.

In many solutions according to the prior art, the cell swelling is limited by using limiting elements external to the cell, such as the elements 3 visible in section in figure 4, such that the maximum swelling H (figure 4) is less than the maximum swelling S in the case of absence of external limiters (figure 3). These swelling limiting elements are generally interposed between one cell and another in the battery pack and therefore occupy space within the battery pack. Furthermore, the limiting devices 3 cannot be too rigid to avoid excessive forces, but on the other hand must be able to limit the swelling. Consequently, limiting elements having a non-linear elastic constant are adopted, so that they oppose a relatively low resisting force to the cell swelling in the first phase of the swelling and a relatively higher force in a second phase.

This is illustrated in the force/deformation diagram of figure 5, which shows the elastic reaction force of the housing wall subject to swelling in the case of using external limiting elements (line L1) and in the case of "free" swelling (line L2). The value Fs of the resisting force that stops the swelling is reached, in the case of using external limiting elements (line L1), at a deformation ds much lower than the deformation df that instead occurs in the case of free swelling (line L2). However, the diagram in figure 5 also makes it evident that the resistance to deformation is low in the first phase of swelling and higher in a second phase. This means, in the case of lithium-ion cells, that the first phase of swelling is more subject to the risk of damage to the jelly rolls and in particular to the risk of metallic lithium deposits ("lithium plating"), with a consequent reduction in the useful life of the cell.

For this reason, in conventional solutions, each stack of cells contained in a battery pack is subjected to compression in the mounted condition of the battery pack, in order to counteract the swelling.

The external limiting elements provided in conventional solutions for the purpose of limiting swelling involve a cost, a weight and occupy space. Furthermore, in battery packs of the type where the cells are in direct contact with a temperature-regulating liquid (typically a dielectric oil), the provision of relatively wide spaces between the cells requires the use of a greater quantity of dielectric oil, which is expensive and heavy.

In general, therefore, in known solutions, given a certain volume available for the battery cells inside a battery pack, the number of cells that can be used also depends on the space that must be left between one cell and another to allow for swelling and/or to arrange the swelling limiting frames.

Again in general, the energy density of a battery pack depends on the energy density of each cell and the number of cells in the pack. Therefore, the need to leave a space between one cell and another represents a limit to the performance of the battery pack.

Finally, the limiting elements interposed between each cell and another for the purpose of limiting swelling are often made of relatively expensive materials, as they must avoid the propagation of heat from one cell to another, particularly in the case where a cell becomes subject to a thermal runaway.

Document US 2008/00142009 A1 illustrates a battery pack in which a single housing is provided having compartments that receive respective packs of electrode sheets. The different compartments inside the housing are defined by partitions that extend between two opposite main walls of the housing. This solution cannot effectively solve the problem due to the risk of breakage in case of housing swelling.

There is therefore a need for new improvements in this field, particularly for the purpose of limiting the swelling phenomenon of battery cells, so as to reduce the risk of cell damage, without however penalizing the performance of the battery pack.

### Object of the invention

It is therefore an object of the present invention to solve the problems indicated above in a simple and efficient way.

In particular, an object of the invention is to provide a battery cell of the type indicated at the beginning of the present description that is capable of limiting the swelling of the battery cell, while at the same time drastically reducing the space that must be left between one cell and another in a stack of cells inside a battery pack, so as to reduce the risk of cell damage, increase the operating life of the cell and at the same time increase the energy density (i.e., the energy produced per unit volume) of the battery pack.

A further object of the invention is to achieve said objectives with means of simple and economical construction.

### Summary of the invention

With a view to achieving one or more of the objects mentioned above, the invention has for its object an electric battery cell having the features indicated in claim 1.

In one exemplary embodiment, said internal connecting member is in the form of a connecting sheet, arranged in a plane orthogonal to the main walls of the battery cell housing and having two opposite sides connected, directly or indirectly, to the main walls of the battery cell housing.

In an example, the connecting sheet has two opposite sides forming 90° bent flanges that are connected to the main walls of the battery cell housing. In an example, said opposite sides of the connecting sheet include 90° bent flanges that are connected to the main walls of the battery cell housing.

Preferably, the connecting sheet extends in height such as to have an upper end proximate to the upper wall of the battery cell housing and a lower end proximate to the lower wall of the battery cell housing. In one embodiment, the connecting sheet incorporates in one piece two vertical sheet portions adjacent to each other, connected by arms elastically extendable in the direction orthogonal to the main walls of the battery cell housing. In a variant, the connecting sheet incorporates in one piece two vertical sheet portions adjacent to each other, connected by an intermediate undulated vertical portion, configured to allow an elastic elongation of the connecting sheet in the direction orthogonal to the main walls of the battery cell housing.

Naturally, the configurations of the internal connecting member described above constitute only non-limiting embodiment examples.

In general, it is possible to provide a single connecting member, or more connecting members spaced apart from each other.

In the case of the above-described embodiments, the connecting sheet can be made of metallic material, or it can be constituted of an electrically insulating material on which electrically conductive tracks are provided, for the electrical connection of terminals of electrode sheet rolls with a positive tab and a negative tab placed on the external surface of the housing.

The wound electrode sheet rolls arranged in each of the chambers defined by the internal connecting member have respective winding axes that can be directed vertically (i.e., perpendicularly to the upper and lower walls of the cell) or horizontally (i.e., perpendicularly to the end walls of the cell).

Thanks to the characteristics indicated above, the present invention allows limiting the swelling of the battery cell without requiring the use of limiting elements external to the cell, whereby the space that must be left between one cell and another of each stack of cells inside a battery pack is drastically reduced compared to known solutions.

The battery cell according to the invention is self-compensating with respect to the swelling phenomenon. A tendency to swelling is counteracted by a reaction force that has a more linear and higher variation compared to what occurs in the known solutions described above, even in the first phase of swelling. Consequently, in the case of the present invention, the application of compression on each stack of battery cells in the mounted condition of the cells within the battery pack is no longer strictly necessary.

Since the reaction forces are balanced by the cell itself, they are not discharged onto the cell containment structure, which reduces the stresses on said structure, which can therefore be lighter and less expensive.

Furthermore, the constant compensation of swelling reduces the possibility of lithium plating formation in the first phase of swelling and lengthens the cell life, also allowing faster charging processes.

As is evident, the invention allows avoiding the cost and weight of the frames interposed between the cells to limit swelling, and, in the case of battery packs with immersion temperature regulation, the quantity of dielectric oil that is required is significantly reduced, which reduces cost and weight.

The reduction of the necessary space between the cells generally allows for better utilization of the space inside the battery module housing or the battery pack, which increases the energy density of the battery pack compared to conventional solutions. From another point of view, an identical amount of energy can be obtained with a battery pack having reduced weight and volume compared to a conventional solution.

Each battery cell according to the invention has a slightly lower energy density compared to a traditional cell, since part of the volume inside the cell is occupied by the internal connecting member between the main walls of the cell. However, the elimination, or drastic reduction, of swelling results in the possibility of arranging more cells inside the battery pack, which gives rise to an energy density of the entire battery pack that is higher compared to conventional solutions.

### Detailed description of the invention

Further characteristics and advantages of the invention will result from the following description with reference to the accompanying drawings, provided by way of non-limiting example only, in which:
figure 1 is a perspective view of a prismatic-type battery cell,
figure 2 illustrates a perspective view and a side view showing the swelling of a conventional-type battery cell,
figure 3 is a sectional view of a conventional battery cell, showing the swelling of the cell,
figure 4 is a sectional view of a conventional-type battery cell, in which swelling limiting elements are provided,
figure 5 is a diagram showing the variation of the elastic reaction generated by the swelling deformation, respectively in the case of a known cell type illustrated in figure 3 and a known cell type illustrated in figure 4,

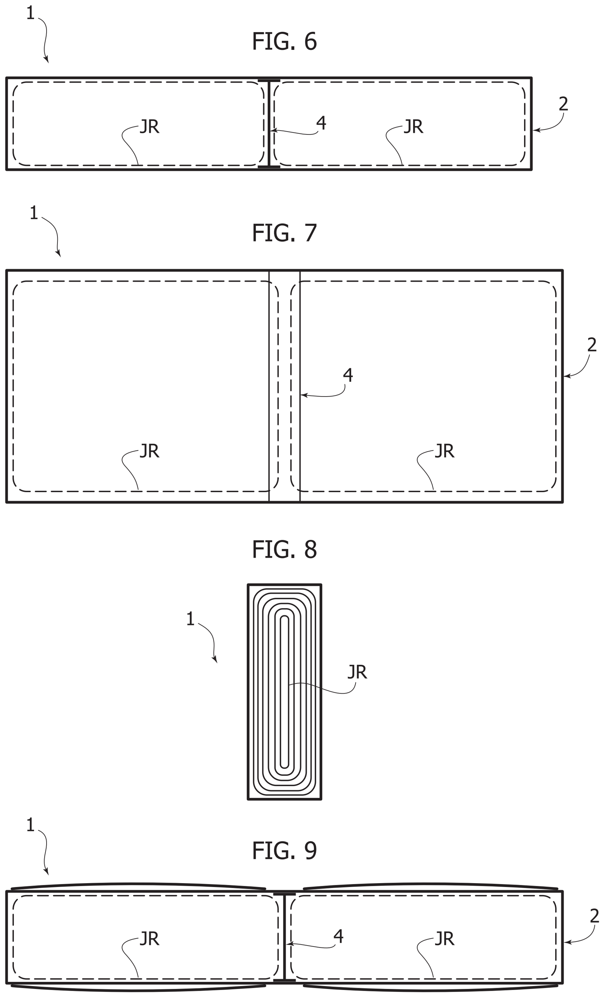

figure 6 is a schematic top view of an embodiment example of a battery cell according to the invention,
figure 7 is a schematic front view of the cell of figure 6,
figure 8 is a sectional view along line VIII-VIII of figure 7,
figure 9 is the same view as figure 6, showing the cell in a condition subject to swelling,

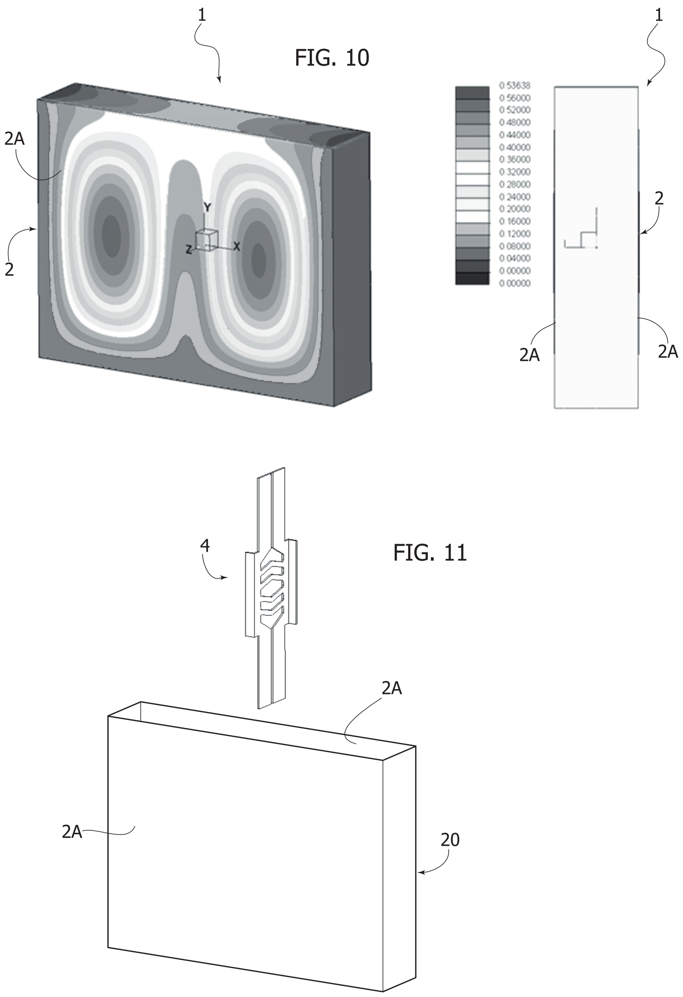

figure 10 illustrates a perspective view and a side view showing the swelling of a battery cell according to the invention,
figures 11, 12 and 13 are perspective views illustrating the components of a first embodiment of a battery cell according to the invention,

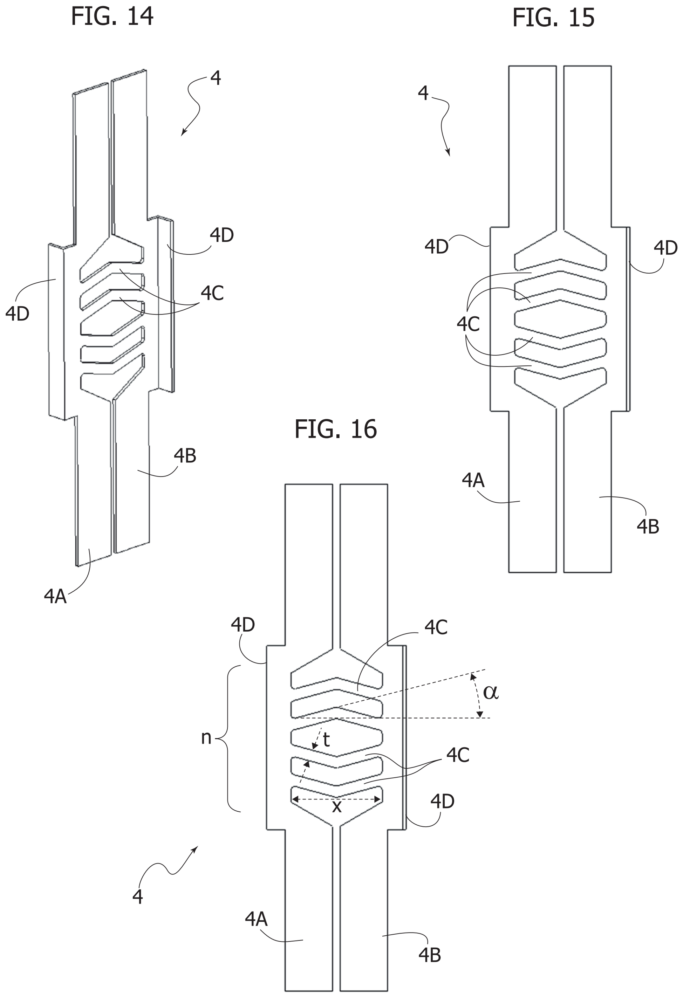

figures 14, 15, 16 are a perspective view, and two front views of the internal connecting member provided in the battery cell of figures 6-8,

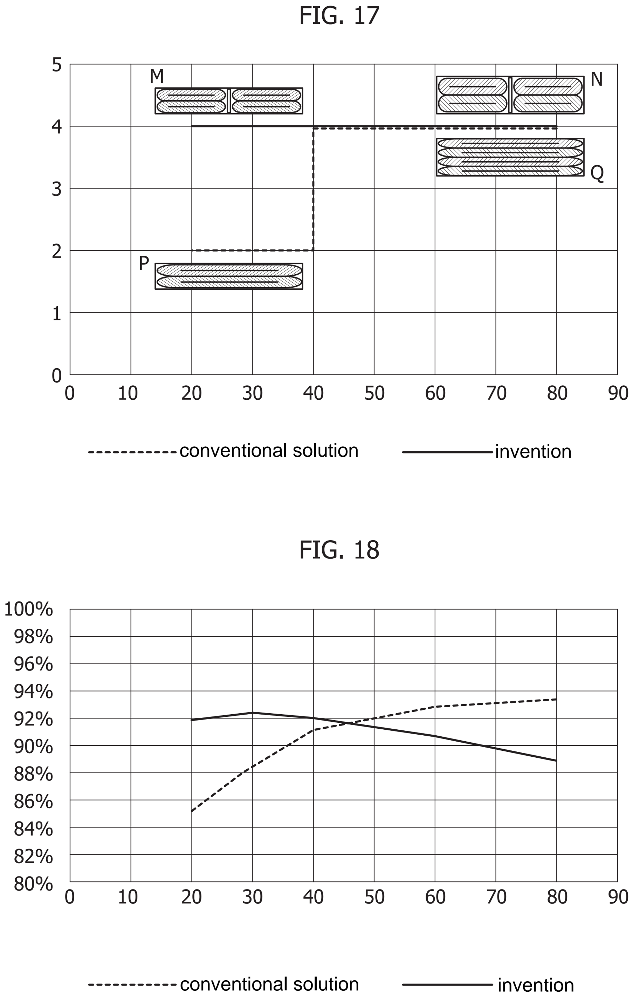

figures 17-22 are diagrams illustrating the advantages of the present invention compared to conventional solutions,

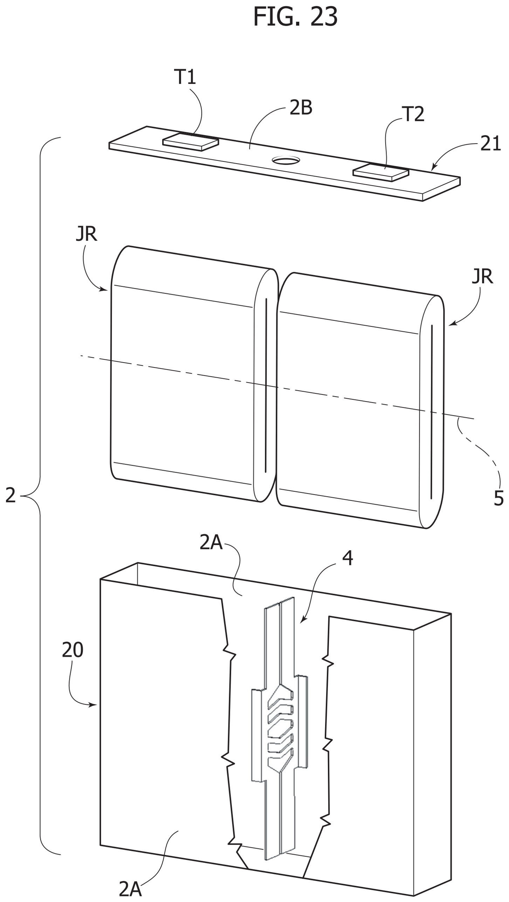

figure 23 is an exploded perspective view of a second embodiment of the battery cell according to the invention,

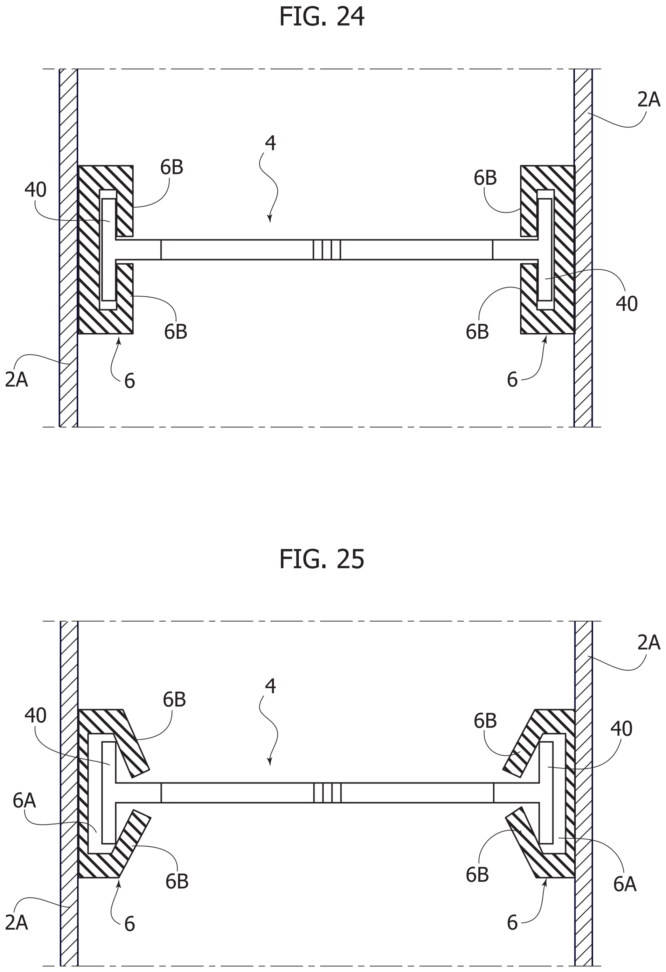

figures 24, 25 illustrate a sectional view of a variant of the internal connecting member, in two different operating conditions,

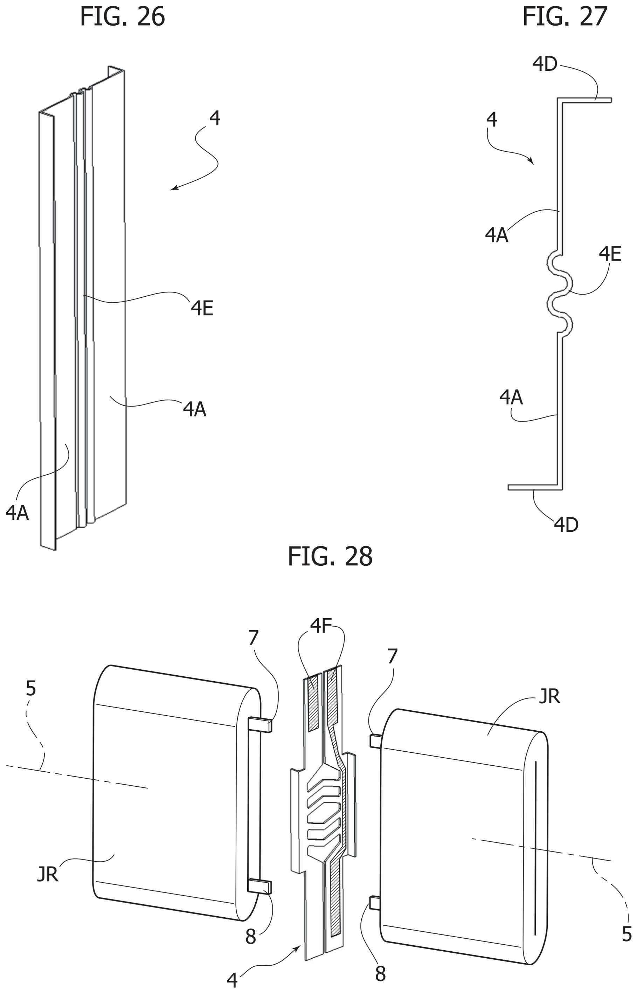

figures 26, 27 are a perspective view and an end view of a further variant of the internal connecting member provided in the battery cell according to the invention,
figure 28 is an exploded perspective view illustrating the internal components of a battery cell according to a further embodiment of the invention,

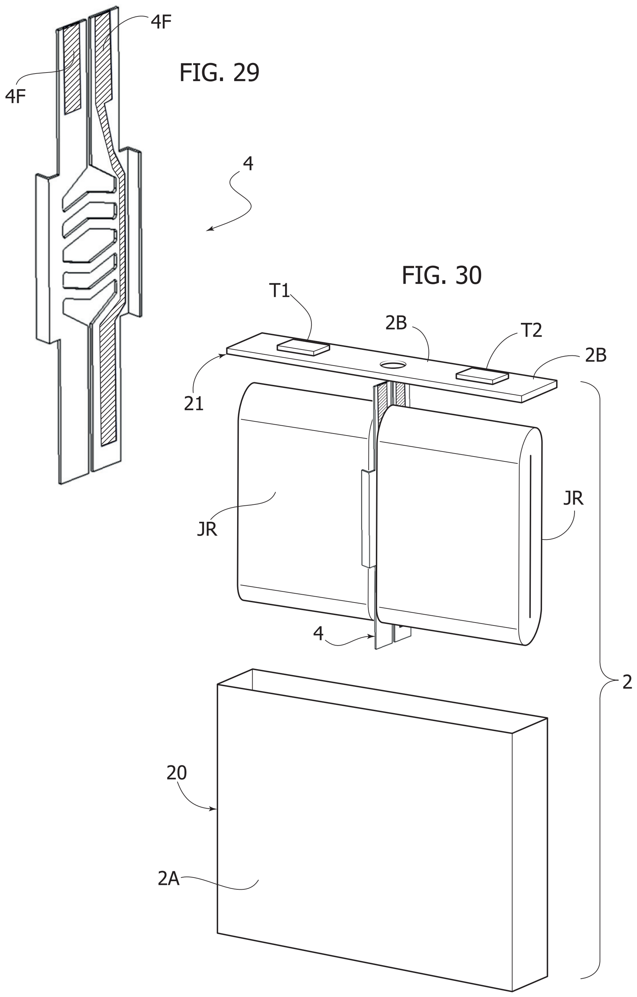

figure 29 shows on an enlarged scale the internal connecting member visible in figure 28, and
figure 30 is an exploded perspective view of the battery cell using the components illustrated in figures 28, 29.

Figures 1-5 relating to the prior art have already been described above.

In figures 6-30, parts common with those illustrated in figures 1-4 are indicated by the same reference numerals.

Figures 6-9 schematically show a battery cell according to the present invention. The fundamental idea underlying the invention is to incorporate inside the housing 2 of the battery cell 1 an anti-swelling device, capable of reducing or even eliminating altogether the swelling of the cell housing during the charge and discharge cycles to which it is subjected, without the use of limiting elements external to the cell, such as those illustrated in figure 4. According to the invention, the anti-swelling device comprises one or more internal connecting members, acting as tie rods, arranged inside the housing 2 and each capable of connecting, rigidly or elastically, the two main walls 2A of the housing 2 to each other, so as to tend to prevent an outward swelling of said walls. In all the solutions illustrated in the accompanying drawings, the anti-swelling device comprises a single internal member 4 that connects the main walls of the cell to each other, although, as already indicated, it is possible to provide more internal connecting members in each cell.

In the example of figures 6-9, the internal connecting member 4 is a beam, having any configuration, which rigidly connects the main walls of the cell to each other. The beam can be made of any suitable material, metallic, or plastic, or composite. The connection to the cell walls can be made by any known technique, for example welding, or gluing or by mechanical connection. In the example of figures 6-9, the internal connecting member 4 extends vertically (with reference to the figures) for the entire height of the cell.

A further peculiar characteristic of the battery cell according to the invention, resulting from the provision of the internal connecting member 4, lies in the fact that the connecting member 4 divides the space inside the cell into two chambers, each of which receives one or more wound electrode sheet rolls (jelly roll) JR. In the example of figures 6-9, each of the two chambers receives a single jelly roll JR, with a winding axis directed horizontally (with reference to the figures).

Figure 9 shows the same view as figure 6 in the condition where the cell is subject to swelling. Due to the provision of the internal connecting member 4, the two main walls of the cell remain at the same distance from each other at the center of the cell and undergo two small swellings on the two sides of the connecting member 4.

This situation is further visualized in figure 10, which shows, like figure 2, a perspective view and a side view of the cell, and illustrates a color scale indicating the swelling (in millimeters) in different areas of each of the two main walls of the cell housing.

Figures 11-16 illustrate a first concrete embodiment example of the present invention.

Also in the example illustrated in figures 11-16, the battery cell 1 comprises a single internal connecting member 4. In this example, the internal connecting member 4 is in the form of a connecting sheet, arranged at the center of the housing 2, in a plane orthogonal to the main walls 2A of the housing 2.

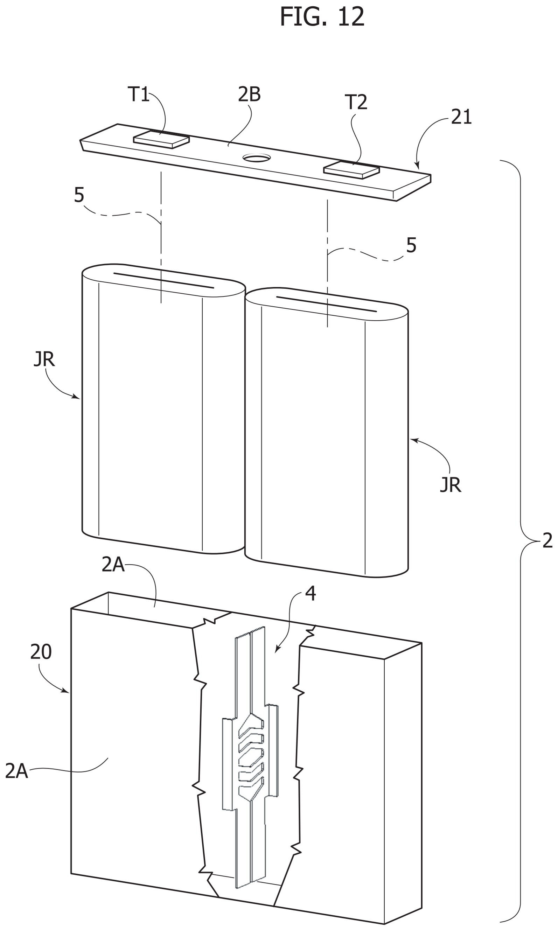

As visible for example, in the exploded perspective view of figure 12, the housing 2 has a structure constituted, in accordance with the prior art, by a container 20, defining the main walls 2A, the lower wall 2C and the end walls 2D of the housing 2, and by a cover 21 defining the upper wall 2B of the housing 2.

In the illustrated example, the sheet 4, which connects to each other (in a manner that will be described in detail below) the two main walls 2A, extends in height for almost the entire height of the housing 2, so as to have an upper end proximate to the upper wall 2B and a lower end proximate to the lower wall 2C of the housing 2.

The connecting sheet 4 divides the space inside the housing 2 of the battery cell into two chambers in which, in the illustrated example, two respective wound electrode sheet rolls JR (so-called "jelly roll") are arranged. In the illustrated example, the jelly rolls JR are arranged with their winding axis 5 (see figure 12) directed vertically (with reference to the figure) and extend substantially for the entire height of the housing 2. In accordance with the prior art, each jelly roll JR has a relatively flattened shape, to be accommodated in the space inside the housing 2. As illustrated below, each of the two chambers inside the housing 2 that are separated by the internal connecting member 4 can receive more than one jelly roll.

In accordance with the prior art, the upper cover 21 of the housing 2 carries on its external surface a positive tab T1 and a negative tab T2 which are respectively electrically connected to the terminals of the jelly rolls JR.

With particular reference to figures 14-16, in the illustrated example, the connecting sheet 4 (which can be made of metallic material, or of plastic material or composite material) incorporates, in a single piece, two vertical portions of sheet 4A, 4B, arranged side by side and connected to each other by a number n of arms 4C which are elastically extendable in a direction orthogonal to the main walls 2A of the housing 2.

The two vertical sheet portions 4A, 4B and the arms 4C are obtained for example by laser cutting from sheet metal, stamping or rapid prototyping. In the illustrated example (see figure 16) each arm 4C has a V-shaped configuration. The inclinationα of each side of the V-shaped configuration, the width t of each arm 4C, the distance X between the ends of each arm 4C and the number n of arms 4C determine the elastic characteristics of the sheet 4 with respect to deformations in the direction orthogonal to the main faces 2A of the housing 2.

Still with reference to the example illustrated in particular in figures 14-16, the arms 4C are formed in a vertically central portion of the sheet 4, which has opposite sides forming 90° bent flanges 4D, for joining to the respective main walls 2A. The flanges 4D are rigidly connected to the main walls 2A of the housing 2 by any known technique, for example by welding, or by gluing, or by mechanical connection.

Thanks to the structure described above, during the operation of a battery pack using battery cells according to the present invention, the swelling of the main walls of the cells is drastically reduced (see figure 10), or even eliminated altogether, compared to what occurs in known solutions. This allows arranging the battery cells inside the container of a battery pack leaving a drastically reduced space between one cell and another compared to what occurs in known solutions, which naturally allows increasing the number of cells inside a given volume of the container or, if preferred, reducing the volume of the container for a given number of cells. In summary, the structure of the battery cell according to the invention allows producing battery packs having an energy density that can be significantly higher than that obtained with known solutions.

As already indicated, the elimination of external limiting elements between the battery cells allows avoiding the weight and cost of such elements. The reduction of spaces between the cells inside the battery pack also allows reducing, in the case of battery packs with immersion temperature regulation systems, the quantity of dielectric oil used, with a reduction in weight and cost.

The advantages of the present invention are further evident from the diagrams illustrated in figures 17-22.

Figure 17 shows that the cell according to the present invention can contain for example up to four jelly rolls both in the case where the cell thickness (dimension Z of figure 2) is relatively small (configuration M in figure 17), and in the case where the cell thickness is larger (configuration N in figure 17), thanks to the fact that the four jelly rolls are arranged in pairs in the two chambers separated by the internal connecting member. In the case of a conventional solution, however, the jelly rolls extend for the entire dimension X of the cell (see figure 2), so four jelly rolls can be provided in the cell only if the cell thickness (dimension Z of figure 2) is significant (configuration Q in figure 17), while in the case of a smaller thickness, a maximum of two jelly rolls can be arranged in the cell (configuration P in figure 17).

Figure 18 is a diagram showing the ratio between the total volume occupied by the jelly rolls of a cell and the volume available in the cell, for different values of the thickness (the dimension Z in figure 2) in the case of the invention and in the case of a conventional solution, with reference to configurations M, N, P and Q of figure 17. The diagram shows that the invention allows a better "filling" of the available space in the cell, compared to a conventional solution when the cell thickness (dimension Z of figure 2) is below a determined value.

As already indicated, in the case of battery packs with cells in direct contact with a dielectric oil for the thermal control of the battery pack, the reduction of spaces between the cells produces a reduction in the quantity of dielectric oil required, with a consequent reduction in weight and cost.

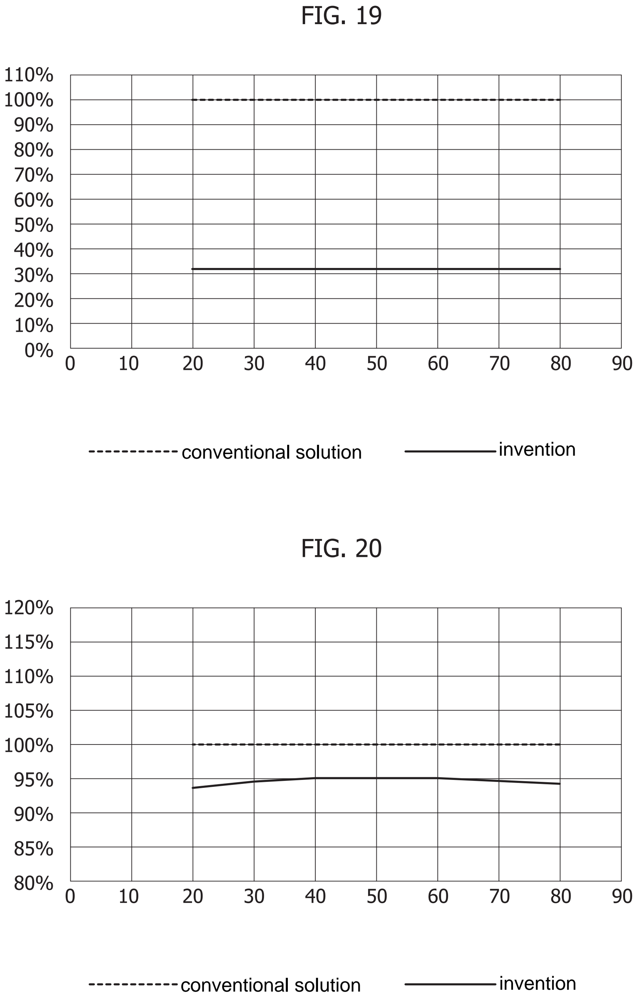

Figure 19 shows by way of example that if 100% is the quantity of oil necessary in a conventional battery pack, the quantity of oil required for a battery pack is about 30-40 %, whatever the cell thickness.

Figure 20 shows by way of example that if 100% is the weight of the cooling dielectric oil used in a conventional battery pack, the weight of the dielectric oil of a battery pack containing cells according to the invention remains around 90-95 %, whatever the cell thickness.

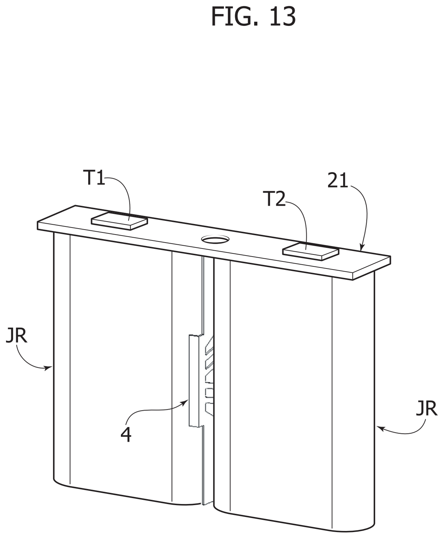

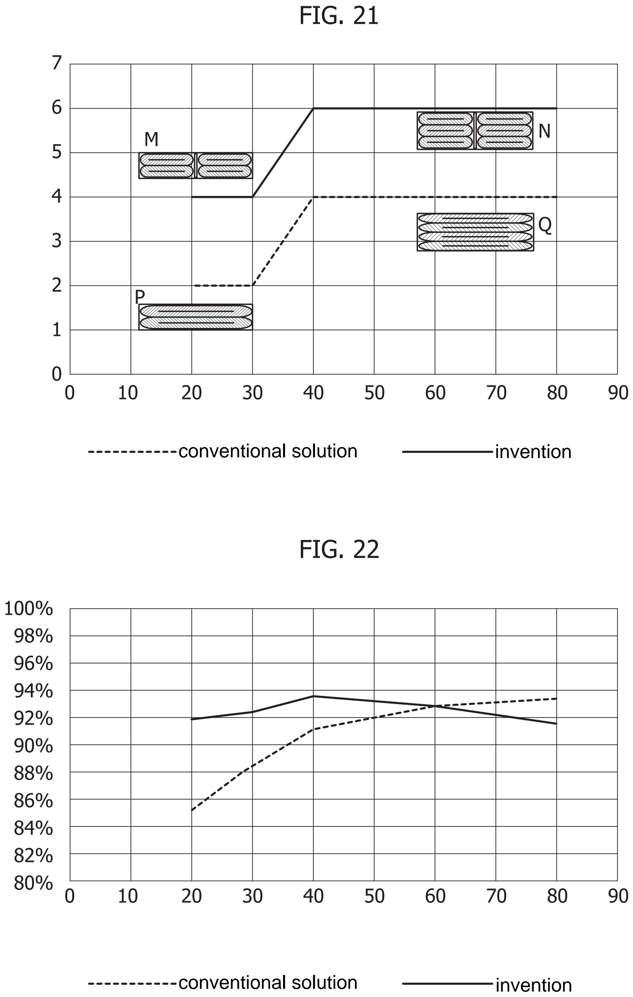

Figures 21 and 22 show diagrams corresponding to those of figures 12 and 13, in a case where it is considered possible to provide up to six jelly rolls in each cell.

Figure 23 illustrates a variant of figure 8, which differs from the example of figure 8 in that the two jelly rolls JR are arranged with their winding axis 5 directed horizontally (with reference to the figure).

Figures 24, 25 illustrate a further embodiment example of the invention in which the internal connecting member 4 is substantially rigid, but is connected to the two main walls 2A by means of two elastic connecting elements 6. In particular, in the example of figures 19, 20, the internal connecting member 4 is still in the form of a sheet with two opposite sides defining two flanges AT40 which are received within two cavities 6A of the elastic connecting members 6. Each elastic member 6 comprises two arms 6B which normally enclose the respective flange 40 inside the cavity 6A, but which can be elastically deformed (figure 25) when the main walls 2A of the housing 2 tend to swell outward.

Figures 26, 27 are a perspective view and an end view of a further variant of the connecting sheet 4. In this example, the connecting sheet 4 incorporates in one piece two vertical sheet portions 4A adjacent to each other, connected by an intermediate undulated vertical portion 4E, configured to allow an elastic elongation of the sheet 4 in the direction orthogonal to the main walls 2A of the housing 2 of the cell. On its opposite vertical edges, the sheet 4 has two 90° bent flanges 4D (see figure 22) for connection to the main walls 2A of the housing 2.

Figures 28, 29, 30 refer to a further embodiment example in which the jelly rolls JR are arranged with their winding axis 5 directed horizontally and in which the connecting sheet 4 is constituted of electrically insulating material on which electrically conductive tracks 4F are mounted for the electrical connection of the positive and negative terminals 7, 8 of each jelly roll JR with the tabs T1, T2 provided on the external surface of the upper wall 2B of the cover 21 of the housing (see figure 30).

As is evident from the preceding description, the battery cell according to the invention allows obtaining a series of important advantages, both from the point of view of an increase in the energy density of the battery pack, and from the point of view of a reduction in the weight and manufacturing cost of the battery pack, and also from the point of view of safety, since the internal connecting sheet 4 can also be made of thermally insulating material, so as to reduce thermal propagation from one jelly roll to another.

The internal connecting member can be heated before being mounted inside the housing of the battery cell such that, when it cools, it decreases in length generating an inward deformation of the main walls of the housing, which gives rise to an initial compression force on the jelly rolls from the first assembly.

Although the embodiment examples illustrated here make use of a single internal connecting member, nothing excludes that more connecting members can be used inside the housing of a cell.

## Claims

1. Electric battery cell, comprising a housing (2) having two opposite main walls (2A), an upper wall (2B), a lower wall (2C) and two end walls (2D), and one or more wound electrode sheet rolls (JR), which are arranged within said housing,
wherein said battery cell (1) incorporates an anti-swelling device, including at least one internal connecting member (4), acting as a tie rod, arranged inside the housing (2) and connecting the two main walls (2A) of the housing (2) to each other, so as to tend to prevent an outward swelling of the main walls (2A),
wherein said internal connecting member (4) divides the space inside the housing (2) of the battery cell (1) into two chambers, in each of which one or more wound electrode sheet rolls (JR) are arranged, and
wherein said at least one internal connecting member (4) is elastically extendable in a direction orthogonal to said main walls (2A), or is connected to the two main walls (2A) of the housing (2) through respective elastic connecting elements configured to provide a connection (6) elastically extendable along a direction orthogonal to the main faces of the housing (2) of the battery cell (1).

2. Battery cell according to claim 1, **characterized in that** said at least one internal connecting member is in the form of a connecting sheet (4), arranged in a plane orthogonal to the main walls (2A) of the housing (2) of the battery cell (1) and having two opposite sides connected, directly or indirectly, to the main walls (2A) of the housing (2) of the cell (1).

3. Battery cell according to claim 2, **characterized in that** the connecting sheet (4) extends in height such as to have an upper end proximate to the upper wall (2B) of the housing (2) of the cell (1) and a lower end proximate to the lower wall (2C) of the housing (2) of the cell (1).

4. Battery cell according to claim 3, **characterized in that** the connecting sheet (4) incorporates in one piece two vertical sheet portions (4A) adjacent to each other, connected by arms (4C) elastically extendable in the direction orthogonal to the main walls (2A) of the housing (2) of the cell (1).

5. Battery cell according to claim 3, **characterized in that** the connecting sheet (4) incorporates in one piece two vertical sheet portions (4A) adjacent to each other, connected by an intermediate undulated vertical portion (4E), which is configured to allow an elastic elongation of the connecting sheet (4) in the direction orthogonal to the main walls (2A) of the housing (2) of the cell (1).

6. Battery cell according to claim 1, **characterized in that** the wound electrode sheet rolls (JR) arranged in the two chambers defined by the internal connecting member have respective winding axes (5) directed vertically or horizontally.

7. Battery cell according to claim 1, **characterized in that** said connecting sheet (4) is made of metallic material or of an electrically insulating material on which electrically conductive tracks (4F) are provided, for the electrical connection of terminals (7, 8) of the electrode sheet rolls (JR) with a positive tab (T1) and with a negative tab (T2) placed on the external surface of the housing (2).

8. Battery pack comprising at least one stack of battery cells (1) according to any one of the preceding claims, **characterized in that** it does not comprise elements interposed between the cells (1) to limit the swelling of the cells.
